(19) Europäisches Patentamt
European Patent Office
Office européen des brevets

(11) Veröffentlichungsnummer: **0 035 112**
**B1**

(12) # EUROPÄISCHE PATENTSCHRIFT

(45) Veröffentlichungstag der Patentschrift: **29.06.83**

(51) Int. Cl.³: **C 02 F 11/00**, C 02 F 11/06

(21) Anmeldenummer: **81100513.1**

(22) Anmeldetag: **24.01.81**

(54) **Verfahren und Anlage zum Verarbeiten von vornehmlich rottefähigen, festen und flüssigen Abfällen.**

(30) Priorität: **30.01.80 DE 3003177**

(43) Veröffentlichungstag der Anmeldung: **09.09.81 Patentblatt 81/36**

(45) Bekanntmachung des Hinweises auf die Patenterteilung: **29.06.83 Patentblatt 83/26**

(84) Benannte Vertragsstaaten: **AT CH DE FR LI NL**

(56) Entgegenhaltungen:

**AT-B-290 425**
**CH-A-410 803**
**DE-B-2 558 255**

(73) Patentinhaber: **Lindemann Maschinenfabrik GmbH, Erkrather Strasse 401, D-4000 Düsseldorf 1 (DE)**

(72) Erfinder: **Stodt, Eberhard, Schlesische Strasse 49, D-4000 Düsseldorf (DE)**
Erfinder: **Lüssem, Heinrich, Dr. rer. nat., Grenzweg 4, D-4000 Düsseldorf (DE)**
Erfinder: **Orth, Helmut, An der Icklack 17, D-4000 Düsseldorf (DE)**

(74) Vertreter: **Bergen, Klaus, Dipl.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

**EP 0 035 112 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren und Anlage zum Verarbeiten von vornehmlich rottefähigen, festen und flüssigen Abfällen

Die Erfindung betrifft ein Verfahren zum Verarbeiten von vornehmlich rottefähigen, festen und flüssigen Abfällen, wie Müll und biologisch aktivem Schlamm, bei dem die festen Abfälle zerkleinert und dann mit dem Schlamm vermischt werden sowie anschliessend das Abfall- Schlamm -Gemisch zu Presslingen verarbeitet wird, sowie eine Anlage zum Durchführen des Verfahrens.

In ländlichen Gebieten, insbesondere in gebirgiger Gegend, und bei weit auseinanderliegender Bebauung ist oftmals die Einrichtung eines Kanalnetzes mit einer zentralen, beispielsweise kommunalen Kläranlage räumlich nicht möglich oder finanziell nicht mehr vertretbar. Daher werden in diesen Gebieten Abwässer in Hausklärgruben geleitet, aus denen von Zeit zu Zeit je nach Anfall bzw. Bedarf frischer oder angefaulter Klärschlamm mit Fäkalien-Sammelwagen abgefahren wird. Da diese Gebiete ohnehin von festen Abfällen entsorgt werden, die auf Mülldeponien gelagert werden, bietet sich hier die Möglichkeit, festen Abfall und Klärschlamm zusammen zu verarbeiten.

In einem aus der DE-C 1 145 646 bekannten Verfahren werden zerkleinerte häusliche Abfälle und Klärschlamm miteinander vermischt. Anschliessend wird das Gemisch unter starker Verdichtung verpresst und danach zwecks Kompostierung und Trocknung an der Luft gelagert. Allerdings war es zum Anmeldezeitpunkt dieses bekannten Verfahrens und bis zum heutigen Tage ausnahmslos allgemein üblich, ausgefaulten Schlamm, der zuvor auf natürliche Weise durch eine anaerobe Behandlung eines als Ausgangsstoff vorliegenden frischen Schlamms gewonnen wurde, bei diesem Verfahren zu verwenden. Diese anaerobe Schlammbehandlung benötigt jedoch verhältnismässig viel Zeit, da ohne künstliche Wärmezufuhr beispielsweise nach einem halben Jahr noch kein ausgefaulter Schlamm vorliegt.

Nach diesem Verfahren ist es auch bekannt, dem Abfall frischen Schlamm unterzumischen, der jedoch zu einer Entwicklung übler Gerüche führt. Zur Vermeidung dieser Geruchsbildung soll entweder frischer Klärschlamm mit durch mikrobielle Selbsterhitzung auf etwa 60°C erwärmten Abfällen vermischt werden, oder der Pressling bedarf einer mehrstündigen Erhitzung auf mindestens 70°C. Mit diesen Massnahmen wird jedoch lediglich eine Hygienisierung und vorübergehende Unterbindung des Geruchs erreicht.

Bei diesem Verfahren erweist es sich zudem als Nachteil, dass entweder der in erheblichen Mengen anfallende Abfall erst einmal vor der Mischung mit dem Schlamm so lange mit grossem Platzbedarf rottend gelagert werden muss, bis die Abfallrotte die für die Mischung benötigte Hygienisierungstemperatur erreicht hat, oder dass dem Gemisch zur Entseuchung unter grossem Aufwand an Energie von aussen Erhitzungswärme zugeführt werden muss. Insbesondere müssen der für die Mischung vorgesehene Abfall in einer Deponie oder der Klärschlamm in einer Kläranlage vorbehandelt werden, so dass ausser diesen Anlagen zusätzlich eine Mischanlage erforderlich ist. Da jedoch vor allem in ländlichen Gebieten keine oder nur sehr wenige Kläranlagen vorhanden sind, müsste bei der dann nach der herkömmlichen Verfahrensweise möglichen Kompostierung eines Gemischs aus Abfall und biologisch aktivem Klärschlamm aus den Hausklärgruben über längere Zeit eine starke Geruchsbelästigung in Kauf genommen werden, bis die Mischung ausgefault ist. Eine derartige Umweltbelastung ist nicht vertretbar.

Voraussetzung für eine anschliessende aerobe Rottung des auf die obige Weise erzeugten Gemischs sind jedoch zusätzliche günstige Wachstumsbedingungen für die in der Mischung vorliegenden aeroben Mikroorganismen, die die organischen Stoffe der Mischung in Kompost umwandeln. So erfordert die aerobe Rottung eine gute Durchlüftung des Gemischs, da es bei unzureichender Sauerstoffzufuhr zur anaeroben Rottung mit gleichzeitiger Geruchsbelästigung übergeht. Weiterhin muss die Mischung die zur Kompostierung erforderliche Mindestfeuchtigkeit enthalten, ohne jedoch die Kapillaren und Kanäle für die Luftzufuhr zu allen Teilen des Gemischs zu verstopfen. Unter diesen geeigneten Bedingungen steigt dann die Temperatur der Kompostmischung auf etwa 60 - 70°C; dadurch wird die Mischung hygienisiert und ist sodann zur Weiterverarbeitung geeignet.

Es sind Anlagen bekannt, in denen der feste Abfall mit dem Schlamm in Fliessrichtung des Abfalls entweder unmittelbar vor oder in einem Abfallzerkleinerer, beispielsweise einem Shredder gemischt wird. Die Zugabe des Schlamms wird allerdings von der Bedienungsperson des Shredders unter Beobachtung der Abfallzufuhr zum Shredder handgesteuert. Bei ungleichmässiger Zufuhr des Abfalls zum Shredder oder für den Fall, dass die Bedienungsperson weitere Aufgaben wahrzunehmen hat und somit ihre Aufmerksamkeit nicht mehr ungeteilt auf die Steuerung der Schlammzugabe gerichtet ist, kann die Mischung des Schlamms mit den Abfällen sehr ungleichmässig ausfallen. Dadurch kann einerseits die Mischung sogenannte Schlammnester mit so hohem Feuchtigkeitsgehalt aufweisen, die zur anaeroben Rottung und damit zur Geruchsbelästigung führen können. Andererseits kann dadurch bei zu geringer Feuchtigkeit der Rottevorgang stark verzögert und die Hygienisierungstemperatur nicht erreicht werden.

Bei einem anderen, aus den Zeitschriften «Kommunalwirtschaft», Heft 9, 1974, S. 336-339 und «Wasser und Abwasser», Heft 9, 1974, S. 270-271 bekannten Verfahren zur gemeinsamen Verarbeitung von festen und flüssigen Abfällen wird zuvor bereits belüfteter Klärschlamm mit anderen bereits mineralisierten, also ausgefaulten Schlämmen gemischt und das Schlammgemisch wiederum oxidiert. Anschliessend wird das Schlammgemisch durch zerkleinerten Sperrmüll eingedickt und danach entwässert, um das so entstandene Müll-Schlammgemisch in einer Rotteanlage zu Kompost zu verarbeiten. Allerdings muss das zur Kompostierung in Mieten aufgeschüttete Gemisch maschinell zwangsbelüftet und die bei der Entwässerung abgezogene, ungereinigte Flüssigkeit in einer Kläranlage behandelt werden. Auch dieses Kompostierungsverfahren erfordert ausser der Misch- und der Kompostierungsanlage eine zusätzliche Kläranlage; zudem erweist sich die mehrfache Belüftung in den einzelnen Verfahrensabschnitten als besonders energieaufwendig.

Weiterhin sind Verfahren bekannt, bei denen zur Nasskompostierung von organischen frischen Klärschlämmen der Schlamm durch intensives Belüften und unter Mithilfe der im Klärschlamm enthaltenen Mikroorganismen in Kompost zersetzt wird. Dieses eine Mineralisierung des Schlamms bewirkende Kompostieren kann bereits nach wenigen Tagen abgebrochen werden, sobald der Schlamm auf eine aerobe Rottung eingestellt, d.h. stabilisiert ist und ohne Geruchsbelästigung weiter verwendet werden kann. Bei dem genannten Verfahren werden die Kompostierungszeiten für eine solche Stabilisierung des Schlamms gegenüber einer entsprechenden Stabilisierung auf natürliche Weise mit einer Faulungszeit bis zu 200 Tagen auf einen geringen Bruchteil erheblich reduziert. Allerdings befasst sich dieses Verfahren nur mit der Aufbereitung einer einzigen Art von Abfallstoffen, nämlich des Klärschlamms.

Der Erfindung liegt daher die Aufgabe zugrunde, ein Verfahren und eine Anlage zum Durchführen dieses Verfahrens zum Verarbeiten von flüssigen Abfällen, vorzugsweise von instabilem unausgefaultem Klärschlamm mit dem Ziel einer hinsichtlich des Verarbeitungsaufwandes und der Umweltbelastung optimalen Schlammbeseitigung zu schaffen.

Diese Aufgabe wird ausgehend von einem Verfahren zum Verarbeiten von vornehmlich rottefähigen, festen und flüssigen Abfällen, wie Müll und biologisch aktivem Schlamm, bei dem die festen Abfälle zerkleinert und dann mit dem Schlamm vermischt werden und anschliessend das Abfall-Schlamm-Gemisch zu Presslingen verpresst wird, erfindungsgemäss dadurch gelöst, dass

a) frischer Schlamm oder ein Schlammgemisch aus teilweise frischem und teilweise angefaultem Schlamm — Erstschlamm — in an sich bekannter Weise in einem Behälter bis zum ersten labilen Gleichgewicht des bakteriellen Abbaus des Schlamms oxidiert wird;

b) dann der so behandelte Schlamm oder ein Schlammgemisch aus teilweise angefaultem und teilweise oxidiertem Schlamm — Zweitschlamm — in feiner Verteilung den zerkleinerten festen Abfällen untergemischt wird; und

c) danach das Abfall-Schlamm-Gemisch zur besseren Vernetzung und gegenseitigen Durchdringung des festen Abfalls und des Schlamms einer scheibenweisen Pressung unter wechselndem Druck und Entspannung unterzogen und das in Form scheibenweise aneinandergereihter Presslinge kompakt oder strangförmig der Pressvorrichtung austretende Abfall-Schlamm-Gemisch für den Gas- und Wasseraustausch durch teilweise Entlastung vom Pressdruck vorbestimmt expandiert und durchlässig gemacht wird.

Unter «Erstschlamm» wird hier frischer Schlamm sowie ein Schlammgemisch aus teilweise frischem und teilweise angefaultem Schlamm verstanden, während mit «Zweitschlamm» ein bis zum ersten labilen Gleichgewicht des bakteriellen Abbaus oxidierter Schlamm sowie ein Schlammgemisch aus teilweise angefaultem und teilweise oxidiertem Schlamm bezeichnet wird.

Bei der Oxidation des Schlamms, die beispielsweise durch Einleiten von Luft oder reinem Sauerstoff bewirkt werden kann, wird der Sauerstoffbedarf des Schlamms soweit gedeckt, dass der Schlamm auf aeroben Abbau eingestellt ist und innerhalb verhältnismässig kurzer Zeit ein Schlamm entsteht, der so weit stabilisiert ist, dass er ohne Geruchsbelästigung weiterverarbeitet werden kann. Die Zeit zur Stabilisierung des Schlammes beträgt je nach Schlammzusammensetzung etwa 3 bis 6 Tage; daher können die zur Durchführung des erfindungsgemässen Verfahrens erforderlichen Behälter sehr viel kleiner sein als die beispielsweise in Klärwerken gebräuchlichen und für lange Faulzeiten ausgelegten Faulbehälter.

Zudem kann bei der Verwendung frischen Schlamms, der in Gebieten ohne Kanalnetz und Klärwerk aus Hausklärgruben stammt, die Behandlung des Schlamms in Klärwerken entfallen, so dass auf die Errichtung von hohe Investitions- und Folgekosten erfordernden Klärwerken verzichtet werden kann. Infolgedessen kann die Schlammbeseitigung nach dem erfindungsgemässen Verfahren erheblich billiger durchgeführt werden. Zudem entfallen die von Klärwerken ausgehenden Nachteile, wie beispielsweise die Geruchsbelästigung oder die Störung des Landschaftsbildes.

Der apparative Aufwand für die erfindungsgemässe Stabililisierung des Schlamms ist verhältnismässig gering, da in einer Anlage zum Durchführen des erfindungsgemässen Verfahrens ohnehin Vorratsbehälter für den Frischschlamm vorhanden sein müssen, um unterschiedliche Anliefermengen von Abfall und Frischschlamm ausgleichen zu können.

Der dem festen Abfall zugesetzte Zweitschlamm beschleunigt auch die Verrottung des Abfallgemisches, die sonst wesentlich längere Zeit beansprucht, und begünstigt die Hygienisierung des Gemischs in der anschliessenden Rottedeponie. Für das Rotten des Abfall-Schlamm-Gemischs, das nachfolgend als Müll-Klärschlamm-Gemisch (MKG) bezeichnet wird, ergeben sich aufgrund bestimmter Merkmale beider Mischungskomponenten, besonders für die Ablagerung in einer Rottedeponie, unerwartet und überraschend günstige Bedingungen. So enthält der erfindungsgemäss aufbereitete Schlamm die für die Müllrotte notwendige Feuchtigkeit, während durch die scheibenweise Pressung des Müll-Klärschlamm-Gemisches unter wechselndem Druck und Entspannung einer aufgrund der nur kurzen Vorbehandlungszeit vorhandenen Neigung des stabilisierten Schlamms, bei nicht ausreichender Sauerstoffzufuhr anaerob weiterzurotten, entgegengewirkt wird. Durch die besondere Struktur der Presslinge, die zudem für den Transport und die Deponielagerung zu Ballen zusammengefasst, d.h. scheibenweise aneinandergereiht werden, erhält jeder Ballen quer zur Pressrichtung vorzugsweise vertikal orientierte Hohlräume, Kanäle und Kapillaren in den einzelnen, den Ballen bildenden Presslingen und darüber hinaus vertikale Spalten zwischen diesen Presslingen, so dass auch bei der Ablagerung des Ballens in einer Rottedeponie für eine ausreichende Luftzufuhr gesorgt ist. Somit ist unter einem Pressling im Sinne des vorliegenden Verfahrens jeweils nur eine Scheibe eines aus mehreren Presslingen zusammengesetzten Ballens zu verstehen. Darüber hinaus wird durch die feine Verteilung des Schlamms die Bildung von Schlammnestern verhindert, die sonst eine anaerobe Faulung unter gleichzeitiger Entwicklung übler Gerüche ergeben würde.

Nach dem erfindungsgemässen Verfahren hergestellte und zu Ballen zusammengesetzte Presslinge zeigten nach Einlagerung in eine Rottedeponie in einem Zeitraum von etwa 4 bis 6 Wochen überraschend einen Temperaturanstieg auf 60 - 70°C. Die bei dieser Temperatur einsetzende Hygienisierung des MKG ist unmittelbar auf die durch das erfindungsgemässe Verfahren herbeigeführten günstigen Bedingungen für die aerobe Rottung des MKG in einer Deponie zurückzuführen. Als besonders vorteilhaft erweist sich bei dieser speziellen Rottung, dass das Gemisch keiner aufwendigen und kostspieligen Nachbehandlung bedarf und zudem im Freien an der Luft, gelagert werden kann, da es keine belästigenden Gerüche entwickelt. Nicht zuletzt besteht ein weiterer Vorteil des erfindungsgemässen Verfahrens auch darin, dass die zu Ballen aneinandergereihten Presslinge aufgrund der verhältnismässig grossen Verdichtung des MKG besonders wirtschaftlich zu den Rottedeponien transportiert werden können, um dort schichtweise eingelagert zu werden.

In bevorzugter Ausführung des erfindungsgemässen Verfahrens kann der Erstschlamm bis zur Vermischung mit den Abfällen im selben Behälter verbleiben, der in Abhängigkeit von der notwendigen Behandlungszeit des Schlamms oder des Schlammgemischs nacheinander zuerst als Anlieferbehälter und anschliessend als Belüftungsbehälter für den Erstschlamm und danach als Ablaufbehälter für den Zweitschlamm eingesetzt wird.

Alternativ kann aber auch vorgesehen sein, dass der Erstschlamm vor seiner Vermischung mit den Abfällen mindestens zwei, vorzugsweise drei Behälter nacheinander durchläuft, die in Abhängigkeit von der notwendigen Behandlungszeit entweder als Anlieferbehälter oder als Belüftungsbehälter für den Erstschlamm oder als Ablaufbehälter für den Zweitschlamm eingesetzt werden.

Es ist jedoch im Rahmen der Erfindung auch möglich, dass der Erstschlamm vor der Vermischung mit den Abfällen in einem von mindestens zwei, vorzugsweise drei Behältern verbleibt, die in Abhängigkeit von der notwendigen Behandlungszeit wechselweise jeweils zuerst als Anlieferbehälter, anschliessend als Belüftungsbehälter und danach als Ablaufbehälter eingesetzt werden. Demnach reicht zur Vorbehandlung des Schlamms ein einzelner Behälter aus, jedoch bieten mehrere in Reihe oder parallel geschaltete Behälter den Vorteil, dass der angelieferte Schlamm getrennt von dem erfindungsgemäss vorbehandelten Schlamm gelagert wird und somit eine gleichmässige Abgabe des stabilisierten Schlamms oder des Schlammgemischs unabhängig von der Anlieferung möglich ist.

Während der Sauerstoffzufuhr können in den teilweise gefüllten Belüftungsbehälter weitere Mengen an Erstschlamm eingeführt werden, soweit sichergestellt ist, dass der Schlamm erst dann mit dem Abfall vermischt wird, wenn der erforderliche Stabilisierungsgrad mit Luft oder reinem Sauerstoff erreicht ist.

Des weiteren kann der Zweitschlamm vor der Vermischung mit den Abfällen in einem der Behälter während einer Beruhigungszeit verbleiben, in der der Flüssigkeitsgehalt des Zweitschlamms durch Absetzen reduziert und die abgeschiedene Flüssigkeit aus dem Behälter entfernt wird. Dieses Absetzverfahren kann so ausgebildet sein, dass während einer, beispielsweise eintägigen Beruhigungszeit, in der der Schlamm im Behälter nicht umgewälzt wird, sich durch das Absetzen der Sink- und Schwebstoffe drei horizontale Zonen ausbilden, deren mittlere Zone die vom Schlamm abgeschiedene Flüssigkeit enthält und als «Wasserzone» bezeichnet wird. Durch Ablassen oder Absaugen dieser Flüssigkeit kann der Wassergehalt im zurückbleibenden Schlamm von etwa 97% bei der Anlieferung auf etwa 85% bis 90% verringert werden. Die abgezogene Flüssigkeit kann zweckmässigerweise über dem bereits in der Rottedeponie befindlichen MKG verrieselt werden, um beispielsweise während der warmen Jahreszeit Verdunstungsverluste auszugleichen. Wenn je nach Witterungslage ein direktes Verrieseln der dem stabilisierten Schlamm entzogenen Flüssigkeit nicht möglich ist, kann diese Flüssigkeit beispielsweise in offenen Vorratsbecken bis zur Verrieselung zwischengebunkert werden.

Ferner kann der Zweitschlamm zur Vergleichmässigung der Schlammzusammensetzung umgewälzt werden. Die Entnahme des Zweitschlamms oder Schlammgemischs aus dem Ablaufbehälter kann durch einen, vorzugsweise automatisch gesteuerten Schnellschluss-Absperrschieber gesteuert werden, wobei der Schlamm oder das Schlammgemisch von einer ständig laufenden Pumpe aus dem Ablaufbehälter herausgepumpt und die kurzzeitig nicht zur Mischung mit dem Abfall benötigte Zweitschlamm- oder Schlammgemischmenge in den Ablaufbehälter zurückgepumpt werden kann.

Weiterhin kann den Behältern neben der Luftzuführung durch Faulgasabsaugung, vorzugsweise dem Anliefer- und dem Belüftungsbehälter, über eine Begasungseinrichtung, Pressluft oder Sauerstoffgas zur aeroben Behandlung des Erstschlamms zugeführt werden. Diese Massnahme verhindert die Entstehung eines zu grossen Unterdrucks in den an die Gasabsaugung angeschlossenen Behältern und zugleich kann der Schlamm durch die über die Begasungseinrichtung eindringende Luft oder den Sauerstoff oxidiert werden.

Vorzugsweise ist vorgesehen, dass das Abfall-Schlamm-Gemisch bei der Pressung einer nur einseitigen Druckbeaufschlagung unterzogen werden kann. Dabei wird eine zusätzliche, im wesentlichen durch die scheibenweise Pressung erzeugte, vertikal orientierte Gitterstruktur des vorzugsweise grob zerkleinerten Abfalls geschaffen, die auch nach der Einlagerung der zu Ballen zusammengefassten Presslinge in der Rottedeponie das Durchdringen von Gas und Feuchtigkeit bzw. Wasser durch den Ballen ermöglicht bzw. noch verbessert. Dies führt zu einer beschleunigten Verdichtung des Gemisches während der aeroben Rotte in der Rottedeponie.

Bei einer Anlage zum Herstellen von Presslingen der vorgenannten Art sind erfindungsgemäss einem Mischer und einer Presse mindestens zwei, vorzugsweise drei Schlammbehälter als Anlieferbehälter und/oder Belüftungsbehälter und/oder Ablaufbehälter vorgeschaltet, wobei mindestens ein Behälter mit Begasungseinrichtungen zur Schlammbelüftung ausgerüstet ist. Als Begasungseinrichtung kann beispielsweise mindestens eine Umwälzpumpe in einem Behälter, vorzugsweise dem Belüftungsbehälter, oder auch in sämtlichen Behältem eingesetzt werden. Die Belüftung des Schlamms kann aber auch durch Einblasen von Luft oder rienem Sauerstoff in die Behälter erfolgen; die Begasungseinrichtungen dafür befinden sich beispielsweise in den Böden oder Seitenwandungen der Behälter. Weiterhin ist es möglich, dem Schlamm, insbesondere im Belüftungsbehälter, sauerstoffabgebende Stoffe zuzusetzen.

Des weiteren können mindestens zwei Behälter, vorzugsweise der Anlieferbehälter und der Belüftungsbehälter als geschlossene Behälter ausgeführt und mit einem Gasabsauger verbunden sein. Vorzugsweise sind sämtliche Behälter gemeinsam an einen Gasabsauger angeschlossen, der die abgezogenen, zum Teil übelriechenden Faulgase über einen Kompostfilter ins Freie leitet. Während der Gasabsauger insbesondere im Falle des Anlieferbehälters sowie gegebenenfalls auch des Ablaufbehälters einen Unterdruck erzeugt, so dass von diesen Behältern keine Geruchsemission ausgehen kann, werden vom Belüftungsbehälter gross Mengen sauerstoffarmer Luft sowie gegebenenfalls Faulgase abgezogen. Zur Regulierung der abzuziehenden Luftmenge können die den Gasabsauger mit dem Behälter verbindenden Absaugleitungen mit Luftsteuerklappen versehen werden, insbe sondere wenn die Behälter wechselweise als Anliefer-, Belüftungs- und Ablaufbehälter eingesetzt werden. Allerdings können auch für jeden Behälter separate Gasabsauger vorgesehen werden, deren Saugleistung beispielsweise anhand polumschaltbarer Lüftermotoren reguliert wird.

Ferner kann mindestens ein Behälter, vorzugsweise der Ablaufbehälter mit einer Umwälzvorrichtung ausgerüstet werden. Bei der Entleerung des Ablaufbehälters wird der Zweitschlamm von dieser Vorrichtung umgewälzt, um eine gleichmässige Schlammzusammensetzung während der gesamten Entleerungszeit zu erhalten.

Weiterhin kann ein Abfallzerkleinerer, vorzugsweise eine Rotorschere einer Abfallzuführung des Mischers vorgeschaltet werden, so dass für die Mischung mit dem Schlamm zerkleinerter Abfall zur Verfügung steht.

In bevorzugter Ausführung der Erfindung sind die Behälter als Turm übereinander angeordnet. Dabei befindet sich der Belüftungsbehälter vorzugsweise zwischen dem Anlieferbehälter und dem Ablaufbehälter. Zweckmässigerweise können der Anlieferbehälter mit dem Belüftungsbehälter und der Belüftungsbehälter mit dem Ablaufbehälter jeweils über einstellbare Schlammablassventile verbunden sein. Bei dieser Ausführung als Turm ist es besonders vorteilhaft, dass durch diese kompakte Bauweise der Behälter der Platzbedarf in der Fläche geringer ist, nur ein, den obersten Behälter abschliessender Deckel sowie nur für den Belüftungsbehälter eine Begasungseinrichtung benötigt wird. Weiterhin können die Rohrleitungen verhältnismässig kurz gehalten werden und es ist eine übersichtliche Betriebsführung möglich, da die Funktionen der Behälter nicht wechseln. Zudem wird bei der Erzeugung des Zweitschlamms verhältnismässig viel Wärme freigesetzt, die an den darüber und den darunterliegenden Behälter abgegeben wird, so dass die Temperatur des Schlamms in diesen beiden Behältern einen für den Abbauvorgang günstigen Wert erreicht.

Die Erfindung wird nachfolgend anhand zweier in der Zeichnung dargestellter Ausführungsbeispiele näher erläutert. In der Zeichnung zeigen:

Fig. 1 eine Anlage zum Herstellen von Presslingsballen aus einem Abfall-Schlamm-Gemisch mit drei parallel geschalteten Behältern für die Stabilisierung frischen Schlamms; und

Fig. 2 einen Ausschnitt aus einer Anlage zum Herstellen von Presslingsballen mit drei in Reihe geschalteten und als Turm übereinander angeordneten Behältern.

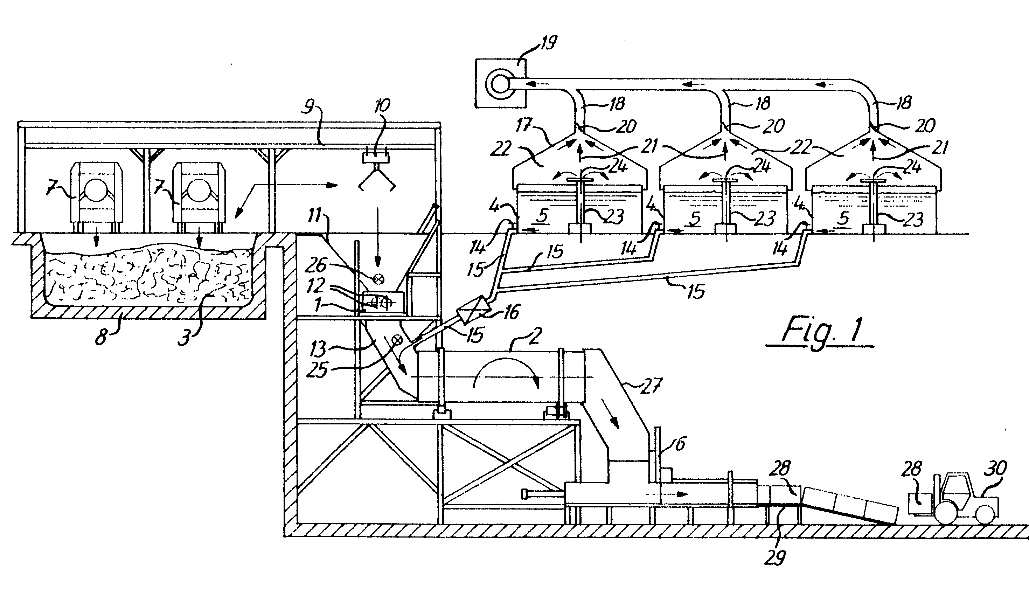

Eine in Fig. 1 dargestellte Anlage zur erfindungsgemässen Verarbeitung eines Abfall-Schlamm-Gemisches, das nachfolgend als Müll-Klärschlamm-Gemisch (MKG) bezeichnet wird, besteht im wesentlichen aus einem Abfallzerkleinerer 1, einem Mischer 2 zur Mischung von festem Abfall 3, mit im Behälter 4 vorbehandeltem Schlamm 5 sowie einer Presse 6 zum Herstellen von Presslingsballen 28.

Der von einem Müllfahrzeug 7 angelieferte feste Abfall 3 gelangt in einem Müllbunker 8. Oberhalb des Müllbunkers ist ein an einer Schiene 9 hängend geführter Greifer 10 bis über einen sich nach unten verjüngenden Trichter 11 verfahrbar angeordnet. Mit seinem unteren Ende mündet der Trichter 11 in den Abfallzerkleinerer 1, der als Rotorschere mit zwei parallel liegenden Rotoren 12 ausgebildet ist. Beim Einsatz einer Rotorschere erweist es sich als vorteilhaft, dass diese einen sehr gleichmässigen Materialstrom zerkleinerten Abfalls abgibt und zudem die Möglichkeit besteht, die Rotoren bei Bedarf nahezu ohne Verzögerung stillzusetzen und wieder in Betrieb zu nehmen. Eine Abfallzuführung 13 ist als ein in der Vertikalen schräg verlaufender Mischschacht ausgeführt und verbindet den Abfallzerkleinerer 1 mit dem unterhalb und seitlich der Rotorschere liegenden Mischer 2. Aus dem Müllbunker wird der im wesentlichen aus Hausmüll, Gewerbemüll und Sperrmüll bestehende Abfall 3 von dem Greifer 10 in den Trichter 11 des Abfallzerkleinerers 1 befördert, dort von den mit Zähnen bestückten Rotoren 12 des Abfallzerkleinerers 1 erfasst und fällt dann in die Abfallzuführung 13.

In diese Abfallzuführung 13 mündet eine Ablassrohrleitung 15, die mit einem Schnellschluss-Absperrschieber 16 versehen ist und die sich verzweigend an drei Behältern 4 für die Schlammvorbehandlung angeschlossen ist. Die Ablassrohrleitung 15 ist an jedem der Behälter 4 mit einem Ablassventil 14 versehen. Die Behälter sind jeweils oberseitig mit einem Deckel 17 abgeschlossen, in den jeweils eine Absaugleitung 18 mündet; die miteinander verbundenen Absaugleitungen führen zu einem Gasabsauger 19. Die Gasabsaugleitungen sind an jedem Deckel 17 mit einer Luftsteuerklappe 20 versehen, mit der das Abströmen der durch Pfeile 21 angedeuteten Faulgase aus einem Gasraum 22 oberhalb des Schlamms 5 zu dem Gasabsauger 19 hin reguliert werden kann.

Weiterhin besitzt jeder Behälter eine als Umwälzpumpe ausgebildete Begasungseinrichtung 23, die mit einem Schlammaustritt 24 aus dem Schlamm 5 in den Gasraum 22 vertikal hinausragt. Da die drei Behälter 4 mit der Ablassrohrleitung 15 in Parallelschaltung verbunden sind und zudem völlig gleich ausgerüstet sind, können sie wechselweise als Anliefer-, Belüftungs- oder Ablaufbehälter eingesetzt werden. Der angelieferte frische Schlamm kann dann in einen der Behälter gefüllt werden, während in einem zweiten Behälter der Schlamm bis zum Erreichen der «Zweitschlamm»-Beschaffenheit stabilisiert wird und zugleich aus einem dritten Behälter Zweitschlamm abgezogen und in der Abfallzuführung mit festem Abfall in feiner Verteilung vermischt wird.

Zur Steuerung der Schlammzusammensetzung ist in der Abfallzuführung 13 eine Kontrollschranke 25 zwischen dem Abfallzerkleinerer 1 und der Mündung der Ablassrohrleitung 15 angebracht, die die Schlammzufuhr über den Absperrschieber 16 automatisch unterbricht, sobald keine Abfälle mehr die Kontrollschranke passieren oder die Rotoren 12 des Abfallzerkleinerers 1 stillstehen bzw. reservieren. Des weiteren befindet sich im Trichter 11 oberhalb des Abfallzerkleinerers 1 und in bestimmtem Abstand von diesem eine weitere Kontrollschranke 26, die die Höhe des Abfallpegels in dem Trichter 11 überwacht und, sobald der Abfallpegel die Kontrollschranke unterschreitet, die Schlammzufuhr unterbricht. Die von der Kontrollschranke 25 entsprechend ihrer Ansteuerung geregelte Schlammzufuhr ist der Menge des für die Mischung bestimmten zerkleinerten Abfalls 3 optimal angepasst.

Der an den Mischschacht angeschlossene Mischer 2 ist als horizontale, um ihre Längsachse drehbare Mischtrommel ausgeführt und mündet an seinem der Abfallzuführung 13 entgegengesetzten Ende in einen in der Vertikalen schräg verlaufenden Füllschacht 27 der unterhalb des Füllschachtes liegenden Ballenpresse 6. In dieser Ballenpresse wird das durch die Mischung entstanden MKG durch einseitige Druckbeaufschlagung einer Pressverformung unterzogen und als kompakte Presslingsballen 28 in mehreren Presshüben, in denen jeweils ein Pressling als Teil eines Ballens erzeugt wird, horizontal in Reihe aus der Ballenpresse 6 auf einen Auslauftisch 29 ausgestossen, von dem sie z.B. mit einem Gabelstapler 30 abgefahren werden.

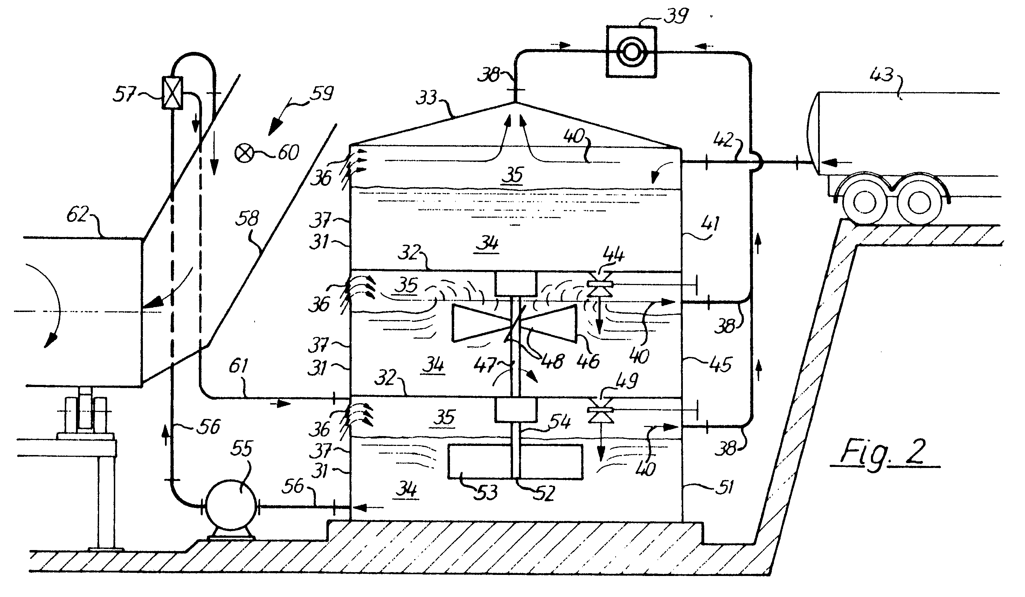

Bei der Anlage gemäss Fig. 2 sind drei Schlammbehälter 31 als Turm so übereinander angeordnet, dass der Boden 32 des jeweils oberen Behälters den darunter liegenden Behälter zugleich wie ein Deckel abschliesst. Der oberste Behälter ist mit einem Deckel 33 versehen. Die Behälter sind in der Höhe nur zu einem Teil mit Schlamm 34 gefüllt; oberhalb des Schlamms befindet sich ein Gasraum 32. Der Gasraum steht mit der Aussenluft über Lufteinlassöffnungen 36 in den Aussenwänden 37 der Behälter in Verbindung und ist zugleich über Absaugleitungen 38 an einen Gasabsauger 39 angeschlossen. Über die Lufteinlassöffnungen 36 und den Gasabsauger 39 wird im Gasraum jedes Behälters 31 ein leichter Unterdruck erzeugt, der eine Geruchsbelästigung durch die durch Pfeile 40 angedeuteten Faulgase unterbindet. Der oberste Behälter 31 dient als Anlieferbehälter 41 und ist über eine Beschickungsleitung 42 an einen Fäkaliensammelwagen 43 angeschlossen. Am Boden 32 des Anlieferbehälters 41 ist ein einstellbares Ablassventil 44 vorgesehen, durch das der Schlamm aus dem Anlieferbehälter 41 in den mittleren Behälter 31 gelangt, der als Belüftungsbehälter 45 dient.

Dieser Belüftungsbehälter 45 weist eine Umwälzvorrichtung 46 auf, die den Schlamm 34 mit propellerartigen, schräg zur Vertikalen gestellten und sich um eine gemeinsame vertikale Längsachse 47 drehenden Flügeln 48 an der Oberfläche verwirbelt und so mit der durch die Lufteinlassöffnungen 36 in den Gasraum 35 gelangten, sauerstoffhaltigen Luft vermischt. Ein Ablassventil 49 im Boden 32 des Belüftungsbehälters 45 kann den bei Erreichen der mineralisierenden Rottungsphase stabilisierten Schlamm in den darunterliegenden Ablaufbehälter 51 einleiten.

Dem in dem Ablaufbehälter 51 befindlichen stabilisierten Schlamm kann angefaulter Schlamm zugemischt werden. Um eine gleichmässige Schlammzusammensetzung zu erreichen, ist der Ablaufbehälter 51 mit einer Umwälzvorrichtung 52 versehen, die mit vertikalen Flügeln 53, die an einer vertikalen Längsachse 54 befestigt sind, den Schlamm verrührt.

Aus dem Ablaufbehälter 51 wird der Zweitschlamm von einer ständig laufenden Pumpe 55 durch eine Ablassrohrleitung 56 mit einem Schnellschluss-Absperrschieber 57 in eine als Mischschacht ausgebildete Abfallzuführung 58 geleitet und dort mit dem durch den Pfeil 59 symbolisierten festen Abfall vermischt. Die Schlammzugabe wird von einer in Fliessrichtung des Abfalls vor der Mischstelle mit dem Schlamm liegenden Kontrollschranke 60 über den Absperrschieber 57 geregelt. Wenn der Absperrschieber 57 die Schlammzufuhr unterbricht, wird der kurzzeitig nicht für die Mischung mit dem Abfall benötigte Zweitschlamm über eine Rückleitung 61 in den Ablaufbehälter zurückgeführt. Das bei der Mischung entstehende MKG gelangt aus der Abfallzuführung 58 in einen Mischer 62, der als horizontale, um ihre Längsachse drehbare Mischtrommel ausgebildet ist.

## Patentansprüche:

1. Verfahren zum Verarbeiten von vornehmlich rottefähigen, festen und flüssigen Abfällen, wie Müll und biologisch aktivem Schlamm, bei dem die festen Abfälle zerkleinert und dann mit dem Schlamm vermischt werden sowie anschliessend das Abfall-Schlamm-Gemisch zu Presslingen verarbeitet wird, dadurch gekennzeichnet, dass

a) frischer Schlamm oder ein Schlammgemisch aus teilweise frischem und teilweise angefaultem Schlamm — Erstschlamm — in an sich bekannter Weise in einem Behälter bis zum ersten labilen Gleichgewicht des bakteriellen Abbaus des Schlamms oxidiert wird,

b) dann der so behandelte Schlamm oder ein Schlammgemisch aus teilweise angefaultem und teilweise oxidiertem Schlamm — Zweitschlamm — in feiner Verteilung den zerkleinerten festen Abfällen untergemischt wird,

c) danach das Abfall-Schlamm-Gemisch zur besseren Vernetzung und gegenseitigen Durchdringung des festen Abfalls und des Schlamms einer scheibenweisen Pressung unter wechselndem Druck und Entspannung unterzogen und das in Form scheibenweise aneinandergereihter Presslinge kompakt oder strangformig aus der Pressvorrichtung austretende Abfall-Schlamm-Gemisch für den Gas- und Wasseraustausch durch teilweise Entlastung vom Pressdruck vorbestimmt expandiert und durchlässig gemacht wird.

2. Verfahren nach Anspruch 1, dadurch gekennzeichnet, dass der Erstschlamm bis zur Vermischung mit den festen Abfällen im selben Behälter verbleibt, und der Behälter in Abhängigkeit von der notwendigen Behandlungszeit des Schlamms oder des Schlammgemisches nacheinander zuerst als Anlieferbehälter und anschliessend als Belüftungsbehälter für den Erstschlamm und danach als Ablaufbehälter für den Zweitschlamm eingesetzt wird.

3. Verfahren nach Anspruch 1, dadurch gekennzeichnet, dass der Erstschlamm vor seiner Vermischung mit den festen Abfällen mindestens zwei, vorzugsweise drei Behälter nacheinander durchläuft, die in Abhängigkeit von der notwendigen Behandlungszeit entweder als Anlieferbehälter oder als Belüftungsbehälter für den Erstschlamm oder als Ablaufbehälter für den Zweitschlamm eingesetzt werden.

4. Verfahren nach Anspruch 1, dadurch gekennzeichnet, dass der Erstschlamm vor der Vermischung mit den festem Abfällen in einem von mindestens zwei, vorzugsweise drei Behältern verbleibt, die in Abhängigkeit von der notwendigen Behandlungszeit wechselweise jeweils zuerst als Anlieferbehälter, anschliessend als Belüftungsbehälter und danach als Ablaufbehälter eingesetzt werden.

5. Verfahren nach einem oder mehreren der Ansprüche 1 bis 4, dadurch gekennzeichnet, dass in den teilweise gefüllten Belüftungsbehälter während der Sauerstoffzufuhr weitere Mengen Erstschlamm eingeführt werden.

6. Verfahren nach einem oder mehreren der Ansprüche 1 bis 5, dadurch gekennzeichnet, dass der Zweitschlamm vor der Vermischung mit den Abfällen in einem der Behälter während einer Beruhigungszeit verbleibt, in der der Flüssigkeitsgehalt des Zweitschlamms durch Absetzen reduziert und die abgeschiedene Flüssigkeit aus dem Behälter entfernt wird.

7. Verfahren nach einem oder mehreren der Ansprüche 1 bis 6, dadurch gekennzeichnet, dass der Zweitschlamm zur Vergleichmässigung der Schlammzusammensetzung umgewälzt wird.

8. Verfahren nach einem oder mehreren der Ansprüche 1 bis 7, dadurch gekennzeichnet, dass der Zweitschlamm ständig aus dem Ablaufbehälter herausgepumpt und die kurzzeitig nicht zur Mischung mit dem festen Abfall benötigte Zweitschlamm- oder Schlammgemischmenge in den Ablaufbehälter zurückgepumpt wird.

9. Verfahren nach einem oder mehreren der Ansprüche 1 bis 8, dadurch gekennzeichnet, dass den Behältern neben einer Luftzuführung durch Faulgasabsaugung, vorzugsweise dem Anlieferbehälter und dem Belüftungsbehälter Pressluft oder Sauerstoffgas zur aeroben Behandlung des Erstschlamms zugeführt wird.

10. Verfahren nach einem oder mehreren der Ansprüche 1 bis 9, gekennzeichnet durch einseitige Druckbeaufschlagung des Abfall-Schlamm-Gemisches.

11. Verfahren nach einem oder mehreren der Ansprüche 1 bis 10, dadurch gekennzeichnet, dass der feste Abfall grob zerkleinert wird.

12. Anlage zum Durchführen des Verfahrens gemäss einem oder mehreren der Ansprüche 1 bis 11, gekennzeichnet durch mindestens zwei, vorzugsweise drei einem Mischer (2) und einer Presse (6) vorgeschaltete Schlammbehälter (4) als Anlieferbehälter und/oder Belüftungsbehälter und/oder Ablaufbehälter, wobei mindestens ein Behälter (4) mit Begasungseinrichtungen (23) zur Schlammbelüftung ausgerüstet ist.

13. Anlage nach Anspruch 12, dadurch gekennzeichnet, dass mindestens zwei Behälter (4), vorzugsweise der Anlieferbehälter und der Belüftungsbehälter als geschlossene Behälter ausgeführt und mit einem Gasabsauger (19) verbunden sind.

14. Anlage nach Anspruch 12 oder 13, dadurch gekennzeichnet, dass mindestens ein Behälter (4), vorzugsweise der Ablaufbehälter mit einer Umwälzvorrichtung ausgerüstet ist.

15. Anlage nach einem oder mehreren der Ansprüche 12 bis 14, dadurch gekennzeichnet, dass einer Abfallzuführung (13) des Mischers (2) ein Abfallzerkleinerer (1), vorzugsweise eine Rotorschere vorgeschaltet ist.

16. Anlage nach einem oder mehreren der Ansprüche 12 bis 15, dadurch gekennzeichnet, dass die Behälter (31) als Turm übereinander angeordnet sind.

17. Anlage nach einem oder mehreren der Ansprüche 12 bis 16, dadurch gekennzeichnet, dass der Anlieferbehälter (41) mit dem Belüftungsbehälter (45) und der Belüftungsbehälter (45) mit dem Ablaufbehälter (51) jeweils über einstellbare Schlammablassventile (44, 49) miteinander verbunden sind.

**Claims**

1. Method of treating mainly decomposable, solid and liquid wastes, such as garbage and biologically active sludge, in which the solid wastes are disintegrated and then mixed with the sludge and thereafter the waste-sludge mixture is processed into pressed blocks or slabs, characterized in that

a) fresh sludge or a sludge mixture of partly fresh and partly rotting sludge — first sludge — is oxidized in known manner in a vessel as far as the first unstable equilibrium of the bacterial decomposition of the sludge,

b) then the thus treated sludge or a sludge mixture of partly rotting and partly oxidized sludge — second sludge — is mixed in finely distributed manner with the disintegrated solid wastes,

c) then the waste-sludge mixture, for improved reticulation and mutual interpenetration of the solid wast and of the sludge, is subjected to slab type pressing under alternating pressure and expansion and the waste-sludge mixture, issuing in the form of pressed slabs arranged in succession compactly or as a strand from the pressing apparatus, is expanded and rendered permeable in predetermined manner for gas and water exchange by partial relieving of the pressing pressure.

2. Method according to Claim 1, characterized in that the first sludge remains in the same vessel until mixing with the solid wastes, and the vessel, as a function of the necessary treatment time of the sludge or the sludge mixture, is used firstly as receiving vessel and thereafter as aerating vessel for the first sludge and thereafter as discharge vessel for the second sludge.

3. Method according to Claim 1, characterized in that the first sludge, before its mixing with the solid wastes, passes through at least two, preferably three vessels in succession, which, as a function of the necessary treatment time, are used either as receiving vessel or as aerating vessel for the first sludge or as discharge vessel for the second sludge.

4. Method according to Claim 1, characterized in that the first sludge, before mixing with the solid wastes, remains in one of at least two, preferably three vessels, which, as a function of the necessary treatment time, are used each alternatively first as receiving vessel, then as aerating vessel and thereafter as discharge vessel.

5. Method according to one or more of Claims 1 to 4, characterized in that further quantities of first sludge are introduced into the partly filled aerating vessel during the feed of oxygen.

6. Method according to one or more of Claims 1 to 5, characterized in that the second sludge, before mixing with the waste, remains in one of the vessels during a stabilization period in which the liquid content of the second sludge is reduced by settling and the separated liquid is removed from the vessel.

7. Method according to one or more of Claims 1 to 6, characterized in that the second sludge is circulated in order to equalize the sludge composition.

8. Method according to one or more of Claims 1 to 7, characterized in that the second sludge is continually pumped out of the discharge vessel and the quantity of second sludge or sludge mixture temporarily not required for mixing with the solid waste is pumped back into the discharge vessel.

9. Method according to one or more of Claims 1 to 8, characterized in that, in addition to an air supply to the vessels by sewage gas extraction, compressed air or oxygen gas is supplied preferably to the receiving vessel and the aerating vessel for the aerobic treating of the first sludge.

10. Method according to one or more of Claims 1 to 9, characterized by pressure loading of the waste-sludge mixture from one side.

11. Method according to one or more of Claims 1 to 10, characterized in that the solid waste is coarsely disintegrated.

12. Installation for carrying out the method according to one or more of Claims 1 to 11, characterized by at least two, preferably three sludge vessels (4), connected before a mixer (2) and a press (6), as receiving vessel and/or aerating vessel and/or discharge vessel, at least one vessel (4) being equipped with gasifying equipment (23) for aerating the sludge.

13. Installation according to Claim 12, characterized in that at least two vessels (4), preferably the receiving vessel and the aerating vessel, are constructed as closed vessels and connected with a gas extractor (19).

14. Installation according to Claims 12 or 13, characterized in that at least one vessel (4), preferably the discharge vessel, is equipped with a circulating device.

15. Installation according to one or more of Claims 12 to 14, characterized in that a waste disintegrator (1), preferably a rotary cutter, is connected before a waste feed (13) to the mixer (2).

16. Installation according to one or more of Claims 12 to 15, characterized in that the vessels (31) are arranged as a tower one above another.

17. Installation according to one or more of Claims 12 to 16, characterized in that the receiving vessel (41) is connected with the aerating vessel (45) and the aerating vessel (45) is connected with the discharge vessel (51), each by adjustable sludge outlet valves (44, 49).

## Revendications

1. Procédé de traitement de détritus essentiellement putréfiables, solides et liquides, tels qu'ordures ménagères et boue biologique active, selon lequel les détritus solides sont broyés et ensuite mélangés à la boue, après quoi le mélange de détritus et de boue est transformé en masses comprimées, caractérisé en ce que

a) on oxyde de la boue fraîche ou un mélange de boue composé de boue partiellement fraîche et de boue partiellement putréfiée (boue primaire), de façon connue en soi, dans un réservoir jusqu'au premier équilibre labil de la décomposition bactérielle,

b) la boue ainsi traitée ou un mélange de boue partiellement putréfiée et de boue partiellement oxydée (boue secondaire) est mélangée en répartition fine aux détritus solides broyés,

c) après quoi le mélange de détritus et de boue est, pour une meilleure réticulation et interpénétration réciproque des détritus solides et de la boue, soumis à un pressage sous forme de disques avec alternance de pression et de décompression, et le mélange de détritus et de boue sortant compact ou en forme de boudin du dispositif de pressage sous forme de disques moulés juxtaposés les uns à la suite des autres est, pour l'échange de gaz et d'eau, expansé de façon prédéterminée par diminution partielle de la pression de pressage et rendu perméable.

2. Procédé selon la revendication 1, caractérisé en ce que la boue primaire reste dans le même réservoir jusqu'à ce qu'elle soit mélangée aux détritus solides, et ce réservoir est, en fonction du temps de traitement nécessaire de la boue ou du mélange de boue, mis en oeuvre successivement d'abord comme réservoir d'alimentation et ensuite comme réservoir d'aération pour la boue primaire et ensuite comme réservoir d'évacuation pour la boue secondaire.

3. Procédé selon la revendication 1, caractérisé en ce que la boue primaire traverse, jusqu'à ce qu'elle soit mélangée aux détritus solides, au moins deux, de préférence trois réservoirs l'un après l'autre, qui, en fonction du temps de traitement nécessaire, sont mis en oeuvre soit comme réservoirs d'alimentation soit comme réservoirs d'aération pour la boue primaire, soit comme réservoirs d'évacuation pour la boue secondaire.

4. Procédé selon la revendication 1, caractérisé en ce que la boue primaire reste, avent d'çtre mélangée aux détritus solides, dans l'un d'au moins deux, de préférence trois réservoirs qui, en fonction du temps de traitement nécessaire, sont mis en oeuvre alternativement chacun d'abord comme réservoir d'alimentation, ensuite comme réservoir d'aération et ensuite comme réservoir d'évacuation.

5. Procédé selon une ou plusieurs des revendications 1 à 4, caractérisé en ce que dans le réservoir d'aération partiellement rempli on introduit, pendant l'amenée d'oxygène, des quantités supplémentaires de boue primaire.

6. Procédé selon une ou plusieurs des revendications 1 à 5, caractérisé en ce qu'avant d'être mélangée aux détritus la boue secondaire séjourne dans un réservoir pendant un temps de mise au repos durant lequel la teneur en liquide de la boue secondaire est réduite par décantation et le liquide séparé est éliminé du réservoir.

7. Procédé selon une ou plusieurs des revendications 1 à 6, caractérisé en ce que la boue secondaire est brassée pour en uniformiser la composition.

8. Procédé selon une ou plusieurs des revendications 1 à 7, caractérisé en ce que la boue secondaire est extraite du réservoir d'évacuation par pompage en continu et la quantité de boue secondaire ou de mélange de boue temporairement non nécessaire pour le mélange avec les détritus solides est renvoyée par pompage dans le réservoir d'évacuation.

9. Procédé selon une ou plusieurs des revendications 1 à 8, caractérisé en ce que pour le traitement aérobie de la boue primaire de l'air comprimé ou de l'oxygène gazeux est envoyé dans les réservoirs en plus d'une amenée d'air par aspiration des gaz de putréfaction, de préférence dans le réservoir d'alimentation et dans le réservoir d'aération.

10. Procédé selon une ou plusieurs des revendications 1 à 9, caractérisé en ce que le mélange de détritus et de boue est soumis à une pression d'un seul côté.

11. Procédé selon une ou plusieurs des revendications 1 à 10, caractérisé en ce que les détritus solides sont soumis à un broyage grossier.

12. Installation pour la mise en oeuvre du procédé selon une ou plusieurs des revendications 1 à 11, caractérisée par au moins deux, de préférence trois réservoirs à boue (4) branchés en amont d'un mélangeur (2) et d'une presse (6) et utilisés comme réservoirs d'alimentation et/ou comme réservoirs d'aération et/ou comme réservoirs d'évacuation, au moins un réservoir (4) étant équipé de systèmes d'amenée de gaz pour aérer la boue.

13. Installation selon la revendication 12, cacactérisée en ce qu'au moins deux réservoirs (4), de préférence le réservoir d'alimentation et le réservoir d'aération, sont des réservoirs fermés et sont reliés à un aspirateur de gaz (19).

14. Installation selon la revendication 12 ou 13, caractérisée en ce qu'au moins un réservoir (4), de préférence le réservoir d'évacuation, est équipé d'un dispositif de brassage.

15. Installation selon une ou plusieurs revendications 12 à 14, caractérisée en ce qu'en amont d'une amenée de détritus (15) du mélangeur (2) est branché un broyeur à détritus (1), de préférence une cisaille à rotor.

16. Installation selon une ou plusieurs des revendications 12 à 15, caractérisée en ce que les réservoirs (31) sont superposés en forme de tour.

17. Installation selon une ou plusieurs des revendications 12 à 16, caractérisée en ce que le réservoir d'alimentation (41) est relié au réservoir d'aération (45) et le réservoir d'aération (45) au réservoir d'évacuation (51) à chaque fois par des robinets de vidange de boue (44, 49) réglables.

Fig. 1

Fig. 2